(19) Europäisches Patentamt
European Patent Office
Office européen des brevets

(11) Publication number: **0 431 634 A2**

# EUROPEAN PATENT APPLICATION

(21) Application number: **90123511.9**

(22) Date of filing: **07.12.90**

(51) Int. Cl.$^5$: **C08L 27/02**, C08L 27/06, C08K 5/00, //(C08L27/06,71:02)

(30) Priority: **08.12.89 US 447725**

(43) Date of publication of application: **12.06.91 Bulletin 91/24**

(84) Designated Contracting States: **AT BE CH DE DK ES FR GB GR IT LI LU NL SE**

(71) Applicant: **BF GOODRICH COMPANY**
**3925 Embassy Parkway**
**Akron, Ohio 44313-1799(US)**

(72) Inventor: **Hsiao-Pao Yu, Simon**
**1812 Farr's Garden Path**
**Westlake, Ohio 44145(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

(54) **Vinyl halide polymer compositions having antistatic properties.**

(57) Substantially rigid compositions are comprised of vinyl halide resin, an ethylene oxide copolymer antistatic agent and an enhancer for the antistatic agent containing an alkylene oxide moiety.

EP 0 431 634 A2

# VINYL HALIDE COMPOSITIONS HAVING ANTISTATIC PROPERTIES

This invention relates to static dissipative, or antistatic, vinyl halide resins.

## BACKGROUND OF THE INVENTION

Vinyl halide resins are thermoplastic, formable and moldable and thus are useful as structural housings for products and devices. However, their use in some electronic applications is discouraged because the resins are electrically insulative and do not dissipate electrical charges which may result during the operating of the device. Such charges are typically the result of static accumulation, and if not dissipated, can release back through the device and cause the device to fail.

Another use for vinyl halide resins is the fabrication of flooring and wallcoverings. Again, the insulative properties of vinyl halide resins present disadvantages due to the accumulation of a static charge in the products. Thus, the use of such products in rooms containing chemicals and devices sensitive to the release of the static charge is discouraged.

For flexible vinyl halide resin applications, adding a relatively large amount of certain plasticizers can provide a product with low resistivity. Thus, high levels of dioctyl phthalate or di-2-ethylhexyl phthalate can render vinyl halide resins useless for insulating electrical conductors. Unfortunately, at low levels, these plasticizers are ineffective for providing antistatic properties to vinyl halide resin-based rigid or semi-rigid products. Also, at the high use levels, vinyl halide resins are too soft to be used in applications requiring rigidity and strength.

Although antistatic compounds are known, conventional antistatic agents are incompatible with vinyl halide resins. Many are ionic and can cause stability problems by interacting with the halide in the resins at high process or use temperatures. Others detract from the mechanical properties of the resin at the antistatic use levels.

Therefore, the need exists for new rigid or semi-rigid vinyl halide resin products which are static dissipative or antistatic.

## SUMMARY OF THE INVENTION

This invention is a substantially rigid or semi-rigid vinyl halide resin composition comprising a vinyl halide resin, an ethylene oxide copolymer antistatic agent, and an enhancer for the antistatic agent which contains an alkylene oxide moiety.

In another aspect, this invention is a process for preparing antistatic, substantially rigid or semi-rigid vinyl halide resin compositions. The process comprises adding to a vinyl halide resin, an ethylene oxide copolymer antistatic agent, and an enhancer for the antistatic agent which contains an alkylene oxide moiety, and then mixing and molding the resin, antistatic agent and enhancer to provide an antistatic vinyl halide resin article.

The terms "antistatic" and "static dissipative" will be used interchangeably in referring to the compositions of this invention. The specific antistatic behavior of the composition can vary according to the desired end use. However, in the preferred compositions of this invention, "antistatic properties" shall mean the composition or article found from the composition exhibits a static decay rate of less than 2.0 seconds, i.e., the composition or article formed from the composition will dissipate a charge of 5,000 volts to 50 volts at 15% relative humidity. In addition to, or alternatively to the static decay rate, "antistatic properties" shall mean that the composition or article made from the composition exhibits a surface resistivity of less than $10^{12}$ ohms/sq. at 50% relative humidity.

The compositions of this invention are useful in making a variety of substantially rigid or semi-rigid products with antistatic properties and are especially suitable for use as films such as shrink-wrap films made in extrusion or calendaring processes. The products exhibit static decay rates exceeding the requirement of Military Specification MIL-B-81705 and EIA Interim Standard EIA-541 according to Federal Test Method Standard 101B, Method 4046. The antistatic properties of the product are further indicated by surface resistivities of the products are less than $10^{13}$ ohm/sq. according to ASTM D-257. The antistatic performance is substantially permanent and relatively independent of atmospheric humidity. Furthermore, the antistatic agent does not cause degradation of the resin at high process temperatures. The problem of blooming, i.e., rapid migration of a plasticizer from the resin associated with the use of too high a level of plasticizer, is also avoided.

DETAILED DESCRIPTION OF THE INVENTION

The vinyl halide resins useful in the compositions of this invention can be homopolymers or copolymers of vinyl halide monomers wherein the vinyl halide comonomer is the major component, i.e., is employed at greater than 50% by weight. Also included within the term "vinyl halide resin" are derivatives of vinyl halide resins, such as halogenated vinyl halide resins. Comonomers which can be copolymerized with the vinyl halide monomers are compounds having a terminal vinyl, i.e., $CH_2=C<$ grouping. Examples include olefinically unsaturated aliphatic and aromatic compounds, olefinically unsaturated carboxylic acids, carboxylic esters, ethers, nitriles, and the like. Examples of specific comonomers include vinylidene chloride, butadiene, styrene, butadiene-acrylonitrile, ethylene, propylene, butadiene-styrene, butadiene-styrene-acrylonitrile, ethylene-carbon monoxide, ethylene-vinyl acetate, vinyl acetate, and the like. Especially preferred resins are polymers of vinyl chloride, vinyl bromide, vinyl fluoride, vinylidene chloride and the like. Preferred derivatives include chlorinated polyvinyl chloride resins. More preferably, the resins are homopolymers of vinyl chloride.

The vinyl halide resin compositions of this invention can also be polymer blends or alloys which are the physical combination of one or more resin systems with the vinyl halide resin, where at least one of the alloy resins is employed at a concentration of greater than 5% by weight. The principal reason for blending is to improve the product cost, a specific property and/or process performance of a polymer composition for a specific end-use application. Exemplary polymer blends are polyvinyl chloride with a) nitrile-butadiene rubbers such as Hycar® by The B.F.Goodrich Company, Krynac® by Polysar, Elastar® by Nippon Zeon, Paracril® by Uniroyal, and Bynite® by Alpha Chemical and Plastics; b) acrylonitrile-butadiene-styrene rubbers such as Cycovin® by Borg-Warner, Lustran® by Monsanto, and Polyman® by Schulman; c) acrylonitrile-styrene-acrylic ester copolymers such as Geloy® by GE; d) acrylic elastomers such as Kydex® by Rohm and Haas; e) ethylene-vinyl acetate copolymers such as Sumifraft® by Sunitomo and Tenneco® by Tenneco; f) chlorinated polyethylene copolymers such as Hostalit® by American Hoeschst; or g) polyurethanes such as Vythene® by Alpha Chemical & Plastics.

The enhancers useful in the compositions of this invention contain an alkylene oxide moiety. Most of these enhancers, and, indeed, the preferred enhancers have the ability to plasticize the resin and thus the term "plasticizer" may be used herein interchangeably with the term "enhancer." Although the term "plasticizer" may be employed hereafter, other enhancers which do not have plasticizing ability but which contain alkylene oxide moieties are included within the invention. The enhancers or plasticizers shall be referred to as "alkoxylated enhancers or plasticizers." The preferred alkoxylated enhancers have the general structure

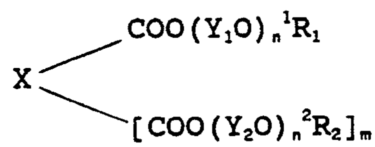

wherein, X is an aliphatic, alicyclic, or aromatic polycarboxylic acid residue with 2 to 16 carbons with or without substituents or an O=P group of a phosphate; $R_1$ and $R_2$ are the same or different straight-chain or branched alkyl groups with 3 to 12 carbons; $Y_1O$ and $Y_2O$ are the same or different ring opened repeated units derived from an alkylene oxide with 2 to 4 carbons, or an epihalohydrin, or a mixture, and, thus, $Y_1$ and $Y_2$ are the same or different alkylene or haloalkylene groups with 2 to 4 carbons or a mixture and preferably, at least one of $Y_1O$ or $Y_2O$ is a ring opened ethylene oxide; $n^1$ and $n^2$ are the same or different integers of 1 to 10; and m is an integer of 1 to 5.

The alkoxylated enhancers useful in the present invention may be prepared either by direct esterification or by transesterification. In direct esterification, a polycarboxylic acid or an orthophosphoric acid is esterified with an alkoxylated alcohol at high temperature in the presence of a catalyst. The polycarboxylic acid can be aliphatic, alicyclic, or aromatic. Examples of aliphatic polycarboxylic acids are oxalic acid, adipic acid, succinic acid, malonic acid, azelaic acid, sebacic acid, glutaric acid, citric acid, aconitic acid, etc. Examples of alicyclic polycarboxylic acids are hexahydrophthalic acid, etc. Examples of aromatic polycarboxylic acids are phthalic acid, isophthalic acid, terephthalic acid, trimellitic acid, pyromellitic acid, bis(carboxylphenyl) ether, bis(carboxylphenyl) sulfone, bis(carboxylphenyl) carbonyl, bis(carboxylphenyl) methane, etc. These polycarboxylic acids may be used alone or in a mixture of two or more. Examples of catalysts include toluene sulfonic acid, zinc chloride, tetraisopropyl titanate, dibutyltin oxide, and the like.

The alcohol base of the alkoxylated alcohols can be straight-chain or branched propanol, butanol, pentanol, hexanol, hetanol, octanol, nonanol, dodecanol, tridecanol, or mixtures of these. The alkoxylated alcohol can also be a polyhydric alcohol or glycol. The polyalkylene glycol of the alkoxylated alcohol can also be derived from an alkylene oxide and examples are derived from ethylene oxide, propylene oxide, butylene oxide, epichlorohydrin, etc. Furthermore, the polyalkylene glycols may be obtained by adding two or more alkylene oxides simultaneously or separately with ethylene oxide, with the total number of repeating alkylene oxide units being 10 or less. The most preferred polyalkylene glycol of alkoxylated alcohol is polyethylene glycols, poly (ethylene oxide-propylene oxide) diol, and poly (ethylene oxide-epichlorohydrin) diol.

Examples of preferred alkoxylated enhancers, or plasticizers, are phthalate, adipate or phosphate esters, such as di(butoxyethyl) phthalate and adipate, di(2-(2-butoxyethoxy)ethyl) phthalate and adipate, tri-(butoxyethyl) phosphate, and tri(2-2-butoxy-ethoxy)ethyl) phosphate. Other highly preferred enhancers or plasticizers are those wherein the alkylene oxide moiety is an ethylene oxide moiety, a mixture of ethylene oxide and propylene oxide moieties, and a mixture of ethylene oxide and epihalohydrin moieties. These enhancers or plasticizers are readily prepared by conventional methods, such as those disclosed in U.S. Patent No. 4,620,026.

The amount of enhancer employed in the compositions of this invention is an amount less than that amount which would provide static-dissipative properties to the resin if the enhancer were added alone without the antistatic agent. Moreover, if the enhancer is a plasticizer, less than a "plasticizing" amount is employed, i.e. the amount is less than an amount which would render the molded composition too soft. However, enough enhancer or plasticizer is added to enhance the antistatic properties of the composition in conjunction with the antistatic agent, and is an amount such that the composition exhibits a Durometer hardness "D" equal to or greater than 25, preferably greater than 40 as measured according to ASTM D-2240. Typically, such amount ranges from about 5 to about 35 parts, preferably from about 10 to about 20 parts per hundred parts by weight of vinyl halide resin.

The antistatic agents useful in the compositions of this invention are solid, nonionic copolymers of ethylene oxide which have a high molecular weight and a dilution solution viscosity of greater than 0.25. By high molecular weight copolymer is meant that the polymers are solid at room temperature and have a DSV (dilution solution viscosity) of greater than 0.25 as determined on a solution made up with 0.25 grams of the polymer in 100 grams of toluene with capillary viscometer at 25°C according to ASTM D-2857, therein referred to as inherent viscosity. Preferably the copolymers have a weight average molecular weight greater than 20,000 as measured by gel permeation chromatography, osmometry, cryoscopy, or ebullioscopy. Preferably, the copolymers have a DSV value in the range of from about 0.25 to about 15.0, and preferably from about 0.5 to about 5.0, and the molecular weight is in the range of from about 25,000 to about 1,000,000. The high molecular weight solid copolymers of ethylene oxide of the present invention are easily compounded with polymeric or resinous materials.

In the antistatic copolymers useful in the present invention, the amount of ethylene oxide can vary from about 5 to 95 weight parts, whereas one or more of the comonomers used along with the ethylene oxide can vary in an amount of from about 95 to 5 weight parts. Particularly preferred copolymers consist of 40 to 95 weight parts of ethylene oxide with 60 to 5 weight parts of one or more comonomers all on the basis of 100 weight parts.

The comonomers useful in the antistatic agents of ethylene oxide copolymers useful in the present invention can be alkylene oxides containing up to 25 carbon atoms represented by the formula:

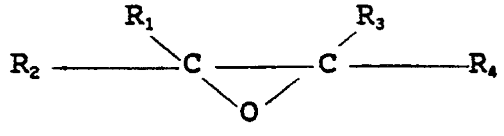

wherein $R_1$, $R_2$, $R_3$, and $R_4$ are selected from the group consisting of hydrogen, saturated aliphatic and cycloaliphatic, monoolefinic aliphatic and cycloaliphatic, diolefinic (conjugated and nonconjugated) aliphatic and cycloaliphatic, and aromatic, aralkyl, alkaryl and a like. Some or all of the $R_1$, $R_2$, $R_3$, and $R_4$ can be halogen-substituted, and can contain oxygen in the form of ether linkages or an ester linkage, or another oxirane group. In addition, both $R_1$ and $R_3$ can represent a divalent aliphatic hydrocarbon radical which, together with the carbon atoms of the oxirane group, can form a cycloaliphatic hydrocarbon ring containing from about 4 to about 10 carbon atoms and preferably from 5 to 6 carbon atoms. Finally, at least one of $R_1$, $R_2$, $R_3$, and $R_4$ is not hydrogen.

Exemplary of the alkylene oxides which are represented by the above structural formula and which can be copolymerized with ethylene oxides are: 1,2-epoxypropane(propylene oxide); 1,2-epoxybutane; 2,3-epoxybutane(cis & trans); 1,2-epoxypentane; 2,3-epoxypentane(cis & trans); 1,2-epoxyhexane; 2,3-epoxyhexane(cis & trans); 3,4-epoxyhexane(cis & trans); 1,2-epoxyheptane; 1,2-epoxydecane; 1,2-epoxydodecane; 1,2-epoxyoctadecane; 7-ethyl-2-methyl-1,2-epoxy epoxyundecane; 2,6,8-trimethyl-1,2-epoxynonane; styrene oxide. Typical alkylene oxides comprising a cycloaliphatic hydrocarbon ring represented by the above formula are: cyclohexene oxide; 6-oxabicyclo[3,1,0]-hexane; 7-oxabicyclo[4,1,0] heptane.

Typical halogen-substituted alkylene oxides represented by the above formula are: epichlorohydrin (3-chloro-1,2-epoxypropane); epibromohydrin; epifluorohydrin; epiidohydrin; 3-chloro-1,2-epoxybutane; 3-chloro-2,3-epoxybutane; 3,3-dichloro-1,2-epoxypropane; 3,3,3-trichloro-1,2-epoxypropane; 3-bromo-1-2-epoxybutane; 3-fluoro-1,2-epoxybutane; 3-iodo-1,2-epoxybutane; 1,1-dichloro-1-fluoro-2,3-epoxypropane; 1-chloro-1,1-dichloro-2,3-epoxypropane; and 1,1,1,2-pentachloro-3,4-epoxybutane.

Typical alkylene oxides with at least one ether linkage represented by the formula are exemplified by: ethyl glycidyl ether; n-butyl glycidyl ether; isobutyl glycidyl ether; t-butyl glycidyl ether; n-hexyl glycidyl ether; 2-ethylhexyl glycidyl ether; heptafluoroisopropyl glycidyl ether; phenyl glycidyl ether; 4-methyl phenyl glycidyl ether; bynzyl glycidyl ether; 2-phenylethyl glycidyl ether; 1,2-dihydropentafluoroisopropyl glycidyl ether; 1,2-trihydrotetrafluoroisopropyl glycidyl ether; 1,1-dihydrotetrafluoropropyl glycidyl ether; 1,1-dihydrononafluoropentyl glycidyl ether; 1,1-dihydropentadecafluorooctyl glycidyl ether; 1,1-dihydropentadecafluorooctyl-$\alpha$-methyl glycidyl ether; 1,1-dihydropentadecafluorooctyl-$\beta$-methyl glycidyl ether; 1,1-dihydropentadecafluorooctyl-$\alpha$-ethyl glycidyl ether; 2,2,2-trifluoro ethyl glycidyl ether.

Typical alkylene oxides with at least one ester linkage represented by the formula are: glycidyl acetate; glycidyl chloroacetate; glycidyl butylrate; and glycidyl stearate; to name a few.

Typical unsaturated alkylene oxides represented by the formula are: allyl glycidyl ether; 4-vinylcyclohexyl glycidyl ether; $\alpha$-terpinyl glycidyl ether; cyclohexenylmethyl glycidyl ether; p-vinylbenzyl glycidyl ether; allylphenyl glycidyl ether; vinyl glycidyl ether; 3,4-epoxy-1-pentene; 4,5-epoxy-2-pentene; 1,2-epoxy-5,9-cyclododecadiene; 3,4-epoxy-1-vinylcyclohexene; 1,2-epoxy-5-cyclooctene; glycidyl acrylate; glycidyl methacrylate; glycidyl crotonate; glycidyl 4-hexenoate.

Preferred alkylene oxides are those in which the $R_2$, $R_3$, and $R_4$ radicals are hydrogen and the $R_1$ radical is a saturated aliphatic or haloaliphatic containing less than two ether linkages. The most preferred alkylene oxide comonomers are propylene oxide and epichlorohydrin.

Other cyclic monomers suitable to copolymerize with ethylene oxide are cyclic ethers with four or more member-ring containing up to 25 carbon atoms except tetrahydropyran and its derivatives. Exemplary cyclic ethers with four or more member-ring are oxetane (1,3-epoxide) , tetrahydrofuran (1,5-epoxide), and oxepane (1,6-epoxide) and their derivatives.

Other suitable cyclic monomers are cyclic acetals containing up to 25 carbon atoms. Exemplary cyclic acetals are trioxane, dioxolane, 1,3,6,9-tetraoxacycloundecane, trioxepane, troxocane, dioxepane, and their derivatives.

Other suitable cyclic monomers are cyclic esters containing up to 25 carbon atoms. Exemplary cyclic esters are $\beta$-valerolactone, $\epsilon$-caprolactone, zeta-enantholactone, $\eta$-caprylactone, butyrolactone and their derivatives.

Copolymerization of the ethylene oxide and the comonomer(s) is carried out using a coordination catalyst system and anhydrous conditions under nitrogen, preferably in an inert diluent. The process may be conducted as a batch or continuous process with a catalyst, monomers, and the inert diluent added simultaneously or in increments during the polymerization, or continuously throughout the polymerization. Ethylene oxide and one or more comonomers are preferably added to the reactor simultaneously or as a mixture, or premixed with the inert diluent before adding the mixture to the reactor, resulting in random copolymers.

Examples of suitable polymerization catalysts include anionic catalyst, cationic catalysts, catalysts based on metal oxides, alkoxides, or carbonates, and coordination catalysts based on an organometallic compound. Among them, coordination catalysts are preferred. Exemplary coordination catalysts are based on an organoaluminum compound which has been modified with water or alcohol or diols, and/or a chelating agent. Other exemplary coordination catalysts are based on an organoaluminum compound and a metal salt of a $\beta$-diketone. Exemplary coordination catalysts are based on an organoaluminum compound which has been modified with a phosphoric acid. Coordination catalysts based on an organomagnesium or an organozinc compound or $\mu$-oxobismetallic trinuclear alkoxides are also suitable.

Exemplary anionic catalysts are potassium hydroxide and sodium hydroxide.

Any diluent that is inert under the polymerization conditions can be used, such as for example: toluene;

benzene; heptane; hexane; butane; cyclohexane; diethyl ether; chlorobenzene; methylenechloride; and ethylene dichloride. Obviously, any mixture of such diluents can be used and in many cases preferably. Depending upon the solubility of the copolymer formed in the diluent, the process could be solution polymerization or slurry polymerization.

The polymerization process can be carried out over a wide range of temperatures and pressures. Usually it will be carried out in a temperature range of about -50 ° C to about 200 ° C, and preferably within the range of from about -30 ° C to about 150 ° C, and most preferably from about 60 ° C to about 120 ° C. The copolymerization temperature can be controlled by jacket cooling/heating or reflux, or both. Usually the copolymerization process will be carried out at superatmospheric pressure up to several hundred pounds per square inch or, on the other hand, at subatmospheric or autogenous pressure. The pressure selected depends upon the comonomer selected and is well within the skill of the art to choose the applicable pressure and temperature.

Antistatic copolymers of ethylene oxide may be used with other suitable known antistatic agents including long chain amines, ethers, esters and amides; salts of quaternary ammonium and sulfonic acids; alkyl, aryl and alkylaryl sulfonates and phosphoric acids; alkyl, aryl, and alkylaryl phosphates, especially their ethoxylate derivatives; and low molecular weight polyether glycols. However, it is preferred that the copolymer of ethylene oxide be used as the sole antistatic agent.

Other additives may also be incorporated to improve the performance of the composition, including fillers, reinforcements, impact modifiers, compatibilizers, heat distortion improvers, processing aids, anti-oxidants, thermal stabilizers, pigments, color agents, ultraviolet-light stabilizers, flame retardants, lubricants, slip agents, and blowing agents. If a plasticizer is desired, it is preferable to select an enhancer which also functions as a plasticizer.

The amount of the antistatic agent added to the compositions of this invention is an amount which provides the desired antistatic properties to the composition in conjunction with the alkoxylated enhancer or plasticizer, but is less than an amount which would provide the desired antistatic properties to the composition alone. Although the amount of the antistatic agent employed may provide a level of antistatic behavior to the composition, the desired degree of antistatic behavior can vary according to the end use of the composition, and it is this degree that is achieved by the combination of the antistatic agent and enhancer. The antistatic properties can be indicated by a surface resistivity less than $10^{13}$ ohm/sq. at 50% R.H. and a static decay rate of less than two seconds from 5,000 to 50 volts at 15% R.H., or of less than 0.5 seconds from 5,000 to 500 volts at 15% R.H. as measured according to Federal Test Method Standard 101B, Method 4046.1. This amount can vary but, typically, ranges from about 1 to about 30, and preferably from about 5 to about 20 parts per hundred parts by weight vinyl halide resin.

The composition of the present invention can be prepared by mechanical mixing the components under the influence of heat and/or pressure by a variety of methods. The actual method chosen will depend to some extent on the nature of the vinyl halide resins and on the desired final physical form of the antistatic polymeric product. The ethylene oxide antistatic agent and alkoxylated enhancers or plasticizers useful in this invention can be incorporated into the vinyl halide resins simultaneously or sequentially. The antistatic copolymer and alkoxylated enhancer or plasticizer can also be incorporated into the vinyl halide resins together with other compounding ingredients, such as lubricants, fillers, impact modifier, and processing aids, or they can be incorporated separately before or after the resin and additives are compounded. Preferably, the antistatic agent and alkoxylated enhancer or plasticizer are well-dispersed because moldability and antistatic properties are especially enhanced and physical properties are less impaired. An ordinary mixer, roll mill, Banbury mixer, or calendar, may be used to incorporate the ethylene oxide copolymer antistatic agent and alkoxylated enhancer or plasticizer into the vinyl halide resins to form entirely satisfactory blends at convenient and customary operating conditions. For example, the ethylene oxide copolymer antistatic agent and alkoxylated enhancer can conveniently be incorporated into a vinyl halide resin by a biaxial extruder and molded or extruded directly into a final product, or it can be extruded in the form of rods which are chopped up into pellets and used in subsequent operations. Another example is to use a Banbury mixer to give a moldable composition, then the composition is rolled by a mill to form a thick sheet and cubic pellets of the composition are obtained subsequently using a screen granulator. Final articles of antistatic resin compositions can be formed by compression molding, injection molding, blow molding, extrusion, or calendaring.

The end use of the article will determine the desired antistatic properties such as surface resistivity. For example, sophisticated electronic equipment would require a higher degree of antistatic properties than carpet or articles for dust prevention. Accordingly, different standards have been developed for specific end use application. For example, electrostatic behavior has been characterized by the Department of Defense in publication DOD-HDBK-263 in terms of surface resistivity. Materials with a surface resistivity in the range

of $10^9$-$10^{12}$ ohms per square at 50% R.H. are "dissipative," i.e., "antistatic," and materials with a surface resistivity equal to or greater than $10^{12}$ are "insulative."

Generally the lower the surface resistivity, the better antistatic properties. However, surface resistivity is not the only measure of antistatic performance. Another is static decay rate which measures the ability of a grounded material to dissipate a known charge that has been induced on the surface of the material. Static decay rate is not always related to the surface resistivity of the materials. One of the main reasons is believed that static decay occurs not only by conduction, but also by the discharge of static electricity into the air and is dependent on the capacitance of the material. Consequently, materials having the same surface resistivity might have different static decay rates when both are measured at the same conditions. Since many specifications ask for the measurements of electrostatic properties to be carried out at different humidity conditions, surface resistivity at 50% R.H. and decay rate at 15% R.H., both must be measured and considered in evaluating antistatic performance.

The vinyl resin compositions of this invention exhibit antistatic properties according to the different measures. The static decay rate can be tested in accordance with Federal Test Method Standard 101B, Method 4046.1, "Electrostatic Properties of Materials" with a Static Decay Meter, Model 406C, obtained from Electro-Tech Systems, Inc. A sheet sample (3"x6") with 1/8-1/16-inch thickness is placed between clamp electrodes contained in a Faraday cage. A 5,000 volt charge is applied to the surface of the specimen and the time in seconds required to dissipate the charge to 500 volts (10% of its initial value) or to 50 volts (1% of its initial value), after a ground is provided, is then measured. Highly insulative materials will not accept a full charge of 5,000 volts on their surface or show residual charge before applying a charge. A material will have antistatic properties if the applied charge drops to 10% of its initial value within 0.5 seconds at 50% relative humidity. The material shall also be considered to have antistatic properties if the decay rate is less than two seconds from 5,000 to 50 volts at 15% R.H. The vinyl resin compositions of this invention typically meet these standards, as well as the surface resistivity standards described above. These properties satisfy the standards established by the National Fire Protection Association in NFPA, Code 56A, "The Standard for the Use Inhalation Anesthetics," which covers the use of products in hospital operating rooms and hazardous environments.

The following examples illustrate the concept of the invention but do not limit its scope.

## EXAMPLES

In all examples, the mixing of the PVC compound and any other components is done in a brabender mixer heated at 185° with hot oil. After mixing is completed (about 5 min.), a 6"x6"x1/8" sheet sample is pressed-molded at 185°C and 30,000 psi. The amounts of EO/epichlorohydrin copolymer and plasticizer are expressed in phr (weight parts per 100 weight parts of the PVC resin compound). The PVC compound is a general purpose Geon® Vinyl composition obtained from The B.F.Goodrich Company suitable for custom injection molding applications and is composed of:

| | |
|---|---|
| Polyvinyl chloride resin | 100 weight parts |
| ABS impact modifier | 15 weight parts |
| UV stabilizer | 3 weight parts |
| Tin stabilizer | 2 weight parts |
| Stearate coated $CaCO_3$ | 5 weight parts |
| Mineral oil | 2 weight parts |
| Fused calcium stearate | 2 weight parts |

Physical tests are carried out in accordance with ASTM D-638 for tensile and elongation and ASTM D-2240 for Durometer hardness "D".

The following examples are given to further illustrate the present invention. The antistatic properties of polymers were determined under controlled conditions at 25°C by surface and volume resistivity at 50% R.H. (relative humidity) and static decay time at 15% R.H. The samples were also conditioned at least 48 hours prior to measurement.

Surface and volume resistivity testing is conducted in accordance with ASTM D-257 with an Electrometer (Model 617) equipped with a high voltage supply (Model 247) and resistivity adapter (Model 6105) all from Keithley Instruments, Inc. The adapter comprises an upper circular electrode and a lower circular electrode encircled with a ring electrode. A sheet sample (3.5 inches in diameter and 1/8-1/16-inch thick) is

placed between the upper and lower electrodes, and a voltage of 500 volts is applied between the electrodes. After 60 seconds, the current is recorded from the Electrometer and converted into surface resistivity in ohms per square or volume resistivity in ohm-$cm^{-1}$ using the equation derived from the dimensions of the electrodes.

COMPARATIVE EXAMPLES C1 - C5
(Not Examples Of This Invention)

In these comparative examples, the PVC compound is mixed with the antistatic agent of EO/epichlorohydrin copolymer. Without the addition of the enhancer or plasticizer, this particular PVC compound requires more than 20 phr of the EO/epichlorohydrin copolymer to exhibit a noninsulative static decay rate. The results of these samples are set forth in Table I.

**TABLE I**

| | Ex.C-1 | Ex.C-2 | Ex.C-3 | Ex.C-4 | Ex.C-5 |
|---|---|---|---|---|---|
| PVC compound | 100 | 100 | 100 | 100 | 100 |
| EO copolymer | 0 | 10 | 12.5 | 15 | 20 |
| Decay Rate from 5KV to 50V at 15% R.H., sec. | I | I | I | I | 0.84 |
| Surface Resistivity at 50% R.H., ohm/sq. | $>10^{15}$ | $1.4x10^{14}$ | $3.6x10^{13}$ | $1.5x10^{13}$ | $3.0x10^{11}$ |
| Volume Resistivity at 50% R.H., ohm-$cm^{-1}$ | $>10^{15}$ | $9.1x10^{14}$ | $4.4x10^{14}$ | $2.7x10^{13}$ | $7.3x10^{13}$ |
| Tensile, psi | 5700 | 5150 | 4880 | 4700 | 4620 |
| %Elongation | 30 | 5 | 0 | 0 | 0 |
| Durometer hardness "D" | 73 | 74 | 70 | 70 | 69 |

I: Highly insulative; cannot be measured by the instrument.

COMPARATIVE EXAMPLES C-6 - C-12
(Not Examples Of This Invention)

In these comparative example, the PVC compound is mixed with a conventional plasticizer DOP [di(2-ethylhexyl phthalate)] (a plasticizer which is free of alkylene oxide moieties), and with or without the EO/epichlorohydrin copolymer antistatic agent. In the concentration range studied, none of the samples except Example C-12 with 60 phr of DOP shows a static decay rate of less than 2.0 seconds, and thus do not show good antistatic performance. Although Example C-12 with 60 phr of DOP shows good antistatic performance, the sample is not substantially rigid. The tensile of the sample is below 500 psi and the hardness is below 25. The results of these samples are set forth in Table II.

**TABLE II**

| | Ex.C-6 | Ex.C-7 | Ex.C-8 | Ex.C-9 | Ex.C-10 | Ex.C-11 | Ex.C-12 |
|---|---|---|---|---|---|---|---|
| PVC Compound | 100 | 100 | 100 | 100 | 100 | 100 | 100 |
| DOP | 20 | 20 | 20 | 25 | 25 | 25 | 60 |
| EO/Epichlorohydrin Copolymer | 0 | 10 | 12.5 | 0 | 10 | 12.5 | 12.5 |
| Decay Rate from 5KV to 50V at 15% R.H., sec. | I | I | I | I | I | >2.0 | 0.39 |
| Surface Resistivity at 50% R.H., ohm/sq. | $>10^{15}$ | $1.8x10^{13}$ | $3.2x10^{13}$ | $4.3x10^{14}$ | $7.2x10^{13}$ | $3.8x10^{12}$ | $8.8x10^{11}$ |
| Volume Resistivity at 50% R.H., ohm-$cm^{-1}$ | $10^{15}$ | $1.8x10^{13}$ | $1.4x10^{13}$ | $8.1x10^{13}$ | $6.1x10^{12}$ | $2.8x10^{12}$ | $4.3x10^{11}$ |
| Tensile, psi | 3100 | 1760 | 1680 | 1820 | 1360 | 1300 | 380 |
| % Elongation | 60 | 50 | 30 | 60 | 50 | 45 | 50 |
| Durometer Hardness "D" | 68 | 60 | 59 | 63 | 55 | 53 | 23 |

I: Highly insulative; cannot be measured by the instrument.

EXAMPLES 1-3

In these examples of the invention, the PVC compound is mixed with an enhancer which is an alkoxylated plasticizer derived from an ester of aliphatic dicarboxylic acid, and the EO/epichlorohydrin antistatic agent. The alkoxylated plasticizer evaluated is di(2-(2-butoxyethoxy) ethyl adipate) obtained from Morton Chemical Division under a trade name of TP-95 Plasticizer. The synergistic effect of alkoxylated plasticizer with the EO/epichlorohydrin antistatic agent in a PVC compound is shown in Examples 1-3. They all show excellent antistatic performance as indicated by the static decay rate less than 2.0 sec. and surface resistivity less than or about $10^{12}$ ohm/sq.; and good physical properties as indicated by tensile strength

greater than 1,000 psi and hardness greater than 45. The results of these samples are set forth in Table III.

As a comparison, a composition comprising no EO/epichlorohydrin antistatic agent but 20 parts per hundred parts resin of the TP-95 plasticizer exhibits a static decay rate at 15% R.H. of greater than 2.0 seconds, a surface resistivity at 50% R.H. of $1.8 \times 10^{13}$ ohm/sq., a volume resistivity at 50% R.H. of $3.3 \times 10^{12}$ ohm-cm$^{-1}$, a tensile strength of 1850 psi, a percent elongation of 80, and a Durometer hardness "D" of 58.

**TABLE III**

| | Ex. 1 | Ex. 2 | Ex. 3 |
|---|---|---|---|
| PVC compound | 100 | 100 | 100 |
| TP-95 | 20 | 20 | 20 |
| EO copolymer | 10 | 12.5 | 15 |
| Decay Rate from 5KV to 50V at 15% R.H., sec. | 1.16 | 0.72 | 0.30 |
| Surface Resistivity at 50% R.H., ohm/sq. | $1.2 \times 10^{12}$ | $8.2 \times 10^{11}$ | $8.9 \times 10^{11}$ |
| Volume Resistivity at 50% R.H., ohm-cm$^{-1}$ | $5.4 \times 10^{11}$ | $6.9 \times 10^{11}$ | $4.7 \times 10^{11}$ |
| Tensile, psi | 1400 | 1320 | 1260 |
| %Elongation | 70 | 70 | 70 |
| Durometer hardness "D" | 48 | 48 | 47 |

EXAMPLES 4-5

In these examples of the invention, the PVC compound is mixed with an enhancer which is an alkoxylated plasticizer derived from an ester of an orthophosphoric acid and with the EO/epichlorohydrin antistatic agent. The alkoxylated plasticizer evaluated is tri(2-butoxyethyl) phosphate obtained from FMC Corporation under the trade name of KP-140. The synergistic effect of the alkoxylated plasticizer with the EO/epichlorohydrin antistatic agent on a PVC compound is shown in Examples 4 and 5. Both show excellent antistatic performance as indicated by the static decay rate less than 2.0 sec. and surface resistivity less than $10^{13}$ ohm/sq.; and good physical properties as indicated by tensile strength greater than 1,000 psi and hardness greater than 45. The results of these samples are set forth in Table IV.

As a comparison, a PVC composition comprised only of 20 parts per hundred of the KP-140 plasticizer exhibits an insulative static decay rate at 15% R.H.

**TABLE IV**

| | Ex. 4 | Ex. 5 |
|---|---|---|
| PVC compound | 100 | 100 |
| KP-140 | 20 | 20 |
| EO copolymer | 10 | 12.5 |
| Decay Rate from 5KV to 50V at 15% R.H., sec. | 1.43 | 1.25 |
| Surface Resistivity at 50% R.H., ohm/sq. | $5.0x10^{12}$ | $1.0x10^{12}$ |
| Volume Resistivity at 50% R.H., ohm-cm$^{-1}$ | $1.2x10^{12}$ | $1.0x10^{12}$ |
| Tensile, psi | 1440 | 1320 |
| %Elongation | 50 | 50 |
| Durometer hardness "D" | 50 | 50 |

EXAMPLE 6

In this example of the invention, the PVC compound is mixed with an enhancer which is an alkoxylated plasticizer derived from an ester of an aromatic polycarboxylic acid, and with the EO/epichlorohydrin copolymer antistatic agent. The alkoxylated plasticizer evaluated is di(2-butoxyethyl) phthalate obtained from C.P. Hall Corporation under a trade name of Plasthall 200 DBEP. The synergistic effect of alkoxylated plasticizer with the EO/epichlorohydrin copolymer on a PVC compound is shown in Example 6. It shows excellent antistatic performance as indicated by the static decay rate less than 2.0 sec. and surface resistivity less than $10^{12}$ ohm/sq., and good physical properties as indicated by tensile greater than 1,000 psi and hardness greater than 45. The results of these samples are set forth in Table V.

As a comparison, a PVC composition comprising 25 parts per hundred parts resin of the Plasthall 200 DBEP plasticizer with no antistatic agent was insulative at 15% R.H.

**TABLE V**

| | Ex. 6 |
|---|---|
| PVC compound | 100 |
| DBEP | 25 |
| EO copolymer | 12.5 |
| Decay Rate from 5KV to 50V at 15% R.H., sec. | 0.33 |
| Surface Resistivity at 50% R.H., ohm/sq. | $3.9x10^{11}$ |
| Volume Resistivity at 50% R.H., ohm-cm$^{-1}$ | $3.6x10^{11}$ |
| Tensile, psi | 1250 |
| %Elongation | 50 |
| Durometer hardness "D | 48 |

## Claims

1. A substantially rigid vinyl halide resin composition comprising a vinyl halide resin, an ethylene oxide copolymer antistatic agent, and an enhancer for the antistatic agent which contains an alkylene oxide moiety, said composition exhibiting antistatic properties.

2. The composition of claim 1 wherein the enhancer is employed in an amount less than an amount which would provide antistatic properties to the composition if the enhancer were added without the antistatic agent, and the antistatic agent is added in an amount less than that which would provide antistatic properties to the composition it the agent were added without the enhancer.

3. The composition of claims 1 or 2 wherein the enhancer is employed at between 5 and 35 parts; and the antistatic agent is employed at between 1 to 30 parts per hundred parts by weight vinyl halide resin.

4. The composition of anyone of claims 1 to 3 wherein the enhancer is a phthalate, adipate or phosphate ester plasticizer.

5. The composition of any one of claims 1 to 4 wherein the antistatic agent copolymer is an ethylene oxide/propylene oxide copolymer or an ethylene oxide/epichlorohydrin copolymer.

6. The composition of anyone of claims 1 to 5, wherein the alkylene oxide moiety on the enhancer is an ethylene oxide moiety, a mixture of ethylene oxide and propylene oxide moieties, or a mixture of ethylene oxide and epichlorohydrin moieties.

7. The composition of anyone of claims 1 to 6 wherein the vinyl halide resin is a polymer of vinyl chloride.

8. The composition of any one of claims 1 to 7 wherein said composition has a Durometer hardness "D" equal to or greater than 25 in accordance with ASTM D-2240, and a surface resistivity in the range of from $10^8$-$10^{13}$ ohm/sq. at 50% R.H., and a static decay rate of less than two seconds from 5,000 to 50 volts at 15% R.H.

9. A process for preparing an antistatic substantially rigid vinyl halide resin composition comprising:
   (a) adding to a vinyl halide resin an ethylene oxide copolymer antistatic agent and an enhancer for the antistatic agent containing an alkylene oxide moiety; and
   (b) mixing and molding the resin, antistatic agent and enhancer to provide an antistatic vinyl halide resin article.

10. The process of claim 9 wherein the enhancer is employed in an amount less than an amount which would provide the composition with a Durometer hardness "D" equal to or less than 25 according to ASTM D-2240, and an amount less than an amount which wculd provide antistatic properties to the composition if the enhancer were added without the antistatic agent, and the antistatic agent is added in an amount less than that which would provide antistatic properties to the composition if the agent were added without the enhancer.

11. The process of claim 10 wherein the enhancer is employed at between 5 and 35 parts; the antistatic agent is employed at between 1 to 30 parts per hundred parts by weight of vinyl halide resin.

12. The process of claim 10 or 11 wherein the enhancer is a phthalate, adipate or phosphate ester plasticizer.

13. The process of any one of claims 8 to 12 wherein the antistatic agent copolymer is an ethylene oxide/propylene oxide copolymer or an ethylene oxide/epichlorohydrin copolymer.

14. The process of any one of claims 8 to 13 wherein the alkylene oxide moiety on the enhancer is an ethylene oxide moiety, a mixture of ethylene oxide and propylene oxide moieties, or a mixture of ethylene oxide and epichlorohydrin moieties.

15. The process of any one of claims 8 to 14 wherein the vinyl halide resin is a polymer of vinyl chloride.

**16.** The process of any one of claims 8 to 15 wherein said composition has a Durometer hardness "D" equal to or greater than 25 in accordance with ASTM D-2240, and a surface resistivity in the range of from $10^8$-$10^{13}$ ohm/sq. at 50% R.H., and a static decay rate of less than two seconds from 5,000 to 50 volts at 15% R.H.